(19) Europäisches Patentamt / European Patent Office / Office européen des brevets

(11) **EP 4 481 927 B1**

(12) **EUROPEAN PATENT SPECIFICATION**

(45) Date of publication and mention of the grant of the patent:
**19.11.2025 Bulletin 2025/47**

(21) Application number: **23866652.3**

(22) Date of filing: **10.08.2023**

(51) International Patent Classification (IPC):
$H01M\ 50/403$ (2021.01)    $H01M\ 50/414$ (2021.01)
$H01M\ 50/417$ (2021.01)    $H01M\ 10/0525$ (2010.01)
$H01M\ 50/426$ (2021.01)    $H01M\ 50/443$ (2021.01)
$H01M\ 50/446$ (2021.01)    $H01M\ 50/449$ (2021.01)
$H01M\ 50/451$ (2021.01)    $H01M\ 50/457$ (2021.01)
$H01M\ 50/46$ (2021.01)    $H01M\ 50/463$ (2021.01)
$H01M\ 50/489$ (2021.01)    $H01M\ 50/491$ (2021.01)

(52) Cooperative Patent Classification (CPC):
H01M 50/489; H01M 10/0525; H01M 50/403;
H01M 50/414; H01M 50/417; H01M 50/426;
H01M 50/443; H01M 50/446; H01M 50/449;
H01M 50/451; H01M 50/457; H01M 50/461;
H01M 50/463; H01M 50/491; Y02E 60/10

(86) International application number:
**PCT/CN2023/112149**

(87) International publication number:
**WO 2024/227319 (07.11.2024 Gazette 2024/45)**

(54) **POLYMER-COATED SEPARATOR HAVING SECONDARY AGGREGATES, MANUFACTURING METHOD THEREFOR, AND BATTERY**

POLYMERBESCHICHTETER SEPARATOR MIT SEKUNDÄRAGGREGATEN, HERSTELLUNGSVERFAHREN DAFÜR UND BATTERIE

SÉPARATEUR REVÊTU DE POLYMÈRE AYANT DES AGRÉGATS SECONDAIRES, SON PROCÉDÉ DE FABRICATION ET BATTERIE

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR

(30) Priority: **04.05.2023 CN 202310483037**

(43) Date of publication of application:
**25.12.2024 Bulletin 2024/52**

(73) Proprietor: **Sinoma Lithium Battery Separator Co., Ltd.**
**Zaozhuang, Shandong 277500 (CN)**

(72) Inventors:
• **BAI, Yaozang**
  **Zaozhang, Shandong 277500 (CN)**
• **SUN, Jing**
  **Zaozhang, Shandong 277500 (CN)**
• **LIU, Gaojun**
  **Zaozhang, Shandong 277500 (CN)**
• **ZHENG, Lei**
  **Zaozhang, Shandong 277500 (CN)**
• **GAO, Feifei**
  **Zaozhang, Shandong 277500 (CN)**
• **LI, Tian**
  **Zaozhang, Shandong 277500 (CN)**
• **QIN, Wenjuan**
  **Zaozhang, Shandong 277500 (CN)**

(74) Representative: **Huang, Liwei**
  **Cäcilienstraße 12**
  **40597 Düsseldorf (DE)**

(56) References cited:
CN-A- 110 571 395    CN-A- 113 363 672
CN-A- 114 094 283    CN-A- 114 665 218
CN-A- 116 190 914    KR-A- 20040 042 749

**Description**

**TECHNICAL FIELD**

The present invention relates to the technical field of battery separators, in particular to a polymer-coated separator with secondary agglomerates, a preparation method therefor, and a battery.

**BACKGROUND**

In recent years, with the rapid growth of power vehicle sales, the demand for power lithium-ion batteries has significantly increased, and data shows that lithium-ion batteries will continue to maintain a higher rate of rise in the future with the development of the demand industry for lithium-ion batteries. With the increasing demand for lithium-ion batteries, the market has higher and higher requirements for the performance of the lithium-ion batteries, which in turn puts forward higher requirements for lithium-ion battery separators.

Separators of ordinary lithium-ion batteries are almost non-bonded to electrode pieces, which leads to easy detachment of lithium-ion batteries during charging and discharging, thereby reducing the cycle life of the batteries. In view of the above problems, the existing treatment method is to coat one or both sides of a separator with a polymer coating having adhesion properties, wherein the polymer can be polyvinylidene fluoride (PVDF) or polymethyl methacrylate (PMMA). However, while existing polymer coatings improve the adhesion of the separators to the electrode pieces, most of the polymer coatings change pore structures of the separators, resulting in an increase in the internal resistance of batteries and a decrease in the charge-discharge rate of the batteries. Thus, balancing the adhesion and the permeability of the polymer coating to obtain a separator with the adhesion and permeability is very difficult.

Some prior arts of polymer-coated separator can be seen in CN 114 094 283 A, CN 116 190 914 A, CN 114 665 218A, CN 113 363 672 A, CN 110 571 395 A.

**SUMMARY**

In view of this, the present invention provides a polymer-coated separator with secondary agglomerates which has high adhesion, high permeability, and high electrolyte uptake and retention, a preparation method therefor, and a battery.

In order to achieve the above object, a first aspect of the present invention provides a polymer-coated separator with secondary agglomerates, including a separator substrate, and a polymer coating applied on a surface of at least one side of the separator substrate, wherein the polymer coating includes a plurality of randomly distributed spray coating points, the spray coating points including a plurality of polymer secondary agglomerates formed by agglomeration of polymer primary particles;

> any one spray coating point in the polymer coating satisfies the following conditions: $25 \leq A/B \leq 40000$, and $100 \leq C/A \leq 10^6$, wherein
> A represents a projected area of the polymer secondary agglomerates within the spray coating point on the separator substrate;
> B represents a projected area of the polymer primary particles within the spray coating point on the separator substrate; and
> C represents a projected area of the spray coating point on the separator substrate; and
> $n \times \sum A/S$ means a proportion of effective bonding area on the polymer coating, and satisfies: $4\% \leq n \times \sum A/S \leq 50\%$, wherein
> S represents a surface area of the separator substrate;
> $\sum A$ represents the sum of projected areas of all polymer secondary agglomerates within the spray coating points on the separator substrate; and
> **n** represents the number of the spray coating points within the area S.

According to any embodiment of the first aspect of the present invention, $25 \leq A/B \leq 10000$, and $2500 \leq C/A \leq 5 \times 10^5$; and

$$6\% \leq n \times \sum A/S \leq 30\%.$$

According to any embodiment of the first aspect of the present invention, the polymer **coating** has a thickness of 0.5-10 $\mu$m.

According to any embodiment of the first aspect of the present invention, the polymer-coated separator has a bonding strength of 1 N/m or more to a ternary positive electrode, and has a bonding strength of 0.5 N/m or more to a graphite negative electrode; and/or

the polymer-coated separator has an ionic conductivity of 80%-110% of an ionic conductivity of the separator substrate; and/or
the polymer-coated separator has an electrolyte uptake rate of 70% or more, and an electrolyte retention rate of 70% or more; and/or
the polymer-coated separator has a powder shedding rate of 5% or less.

According to any embodiment of the first aspect of the present invention, the polymer coating includes:

80-100 parts by mass a polymer with secondary agglomerates;
2-20 parts by mass a binder; and
0.01-3 parts by mass a dispersant.

According to any embodiment of the first aspect of the present invention, the polymer with the secondary agglomerates includes at least one selected from a polyvinylidene fluoride homopolymer (PVDF), a polyvinylidene fluoride-trifluoroethylene copolymer (PVDF-TrFE), a polyvinylidene fluoride-methyl methacrylate copolymer (PVDF-PMMA), a polyvinylidene fluoride-hexafluoropropylene copolymer (PVDF-HFP), a polyvinylidene fluoride-acrylic acid copolymer, polymethyl methacrylate (PMMA), polyethylene (PE), and an acrylate polymer.
According to any embodiment of the first aspect of the present invention, the binder includes at least one selected from carboxymethylcellulose, hydroxyethylcellulose, polyacrylic acid, polymethacrylic acid, polymethyl methacrylate, and an acrylonitrile multipolymer.
According to any embodiment of the first aspect of the present invention, the dispersant includes at least one selected from an ethylene-acrylic acid copolymer, an ethylene-vinyl acetate copolymer, acrylic acid-polyurethane, and polyethylene glycol.
According to any embodiment of the first aspect of the present invention, the separator substrate is selected from at least one of a polyethylene film, a polypropylene film, a polyimide film, a polyvinylidene fluoride film, a polyvinylidene fluoride-hexafluoropropylene film, a polyamide film, and a polyethylene terephthalate film.
According to any embodiment of the first aspect of the present invention, the separator substrate has a thickness of 3-25 $\mu$m, and a porosity of 20-80%.
A second aspect of the present invention provides a preparation method for the polymer-coated separator with the secondary agglomerates, including:

S01, uniformly mixing a dispersant with water, then adding a polymer in a batches, a mass of the polymer added each time being 1/a of a total amount, each time after adding the polymer, first performing slow stirring, then performing quick stirring and then performing slow stirring, until the polymer is completely added, wherein a≥2; optionally performing grinding treatment, finally adding a binder, and performing uniform mixing and filtering to obtain a polymer slurry;
S02, coating a surface of at least one side of a separator substrate with the polymer slurry by means of spin spraying to obtain a polymer coating, wherein spin spraying parameters: a coating speed of 100 m/min-300 m/min, a slurry spraying flow rate being 1500 mL/min-15000 mL/min, a rotational speed of the spraying being 5000 rpm-15000 rpm, the number of teeth of a rotary disc for the spraying being 200 teeth to 600 teeth, and a distance from the rotary disc to a membrane surface being 20 cm-50 cm; and
S03, drying the separator substrate and the polymer coating to obtain the polymer-coated separator with the secondary agglomerates.

According to any embodiment of the second aspect of the present invention, the step S01 includes:

S011, uniformly mixing the water with the dispersant to obtain a first mixed solution;
S012, adding the polymer into the first mixed solution in a batches, the amount of the polymer added each time being 1/a of the total amount, after each addition, performing first-stage dispersion: wherein a stirring rotational speed is 100 rpm-600 rpm, and a stirring time is 10 min-50 min, and then performing second-stage dispersion: wherein a stirring rotational speed is 1000 rpm-2000 rpm, and a stirring time is 30 min-180 min, and finally performing third-stage dispersion: wherein a stirring rotational speed is 100 rpm-600 rpm, and a stirring time is 10 min-50 min, until the polymer is completely added to obtain a second mixed solution; and
S013, adding the binder into the second mixed solution, performing uniform stirring, and performing filtering through a 40-300-mesh filter to obtain the polymer slurry.

According to any embodiment of the second aspect of the present invention, the polymer slurry has a particle size D10 of 1-4 $\mu$m and a particle size D90 of 6-20 $\mu$m.

According to any embodiment of the second aspect of the present invention, the polymer coating amount is 0.05-1.5 g/m$^2$.

According to any embodiment of the second aspect of the present invention, the drying in the step S03 is performed at a temperature of 50-90°C.

A third aspect of the present invention provides a battery, including the polymer-coated separator with the secondary agglomerates according to the first aspect of the present invention or the polymer-coated separator with the secondary agglomerates prepared by the preparation method according to the second aspect of the present invention.

Beneficial effects:

according to the polymer-coated separator with the secondary agglomerates provided by the present invention, a coated separator with high adhesion, high ion permeability, high electrolyte uptake and retention, and low powder shedding rate is obtained by controlling an agglomeration state of the polymer secondary agglomerates and the distribution of the secondary agglomerates within the spray coating points.

Additional aspects and advantages of the present invention will be given in part in the following description, and in part will be obvious from the following description, or will be understood by the practice of the present invention.

## BRIEF DESCRIPTION OF THE DRAWINGS

The accompanying drawings are used to provide a further understanding of the present invention and constitute a part of the description, and are used to explain the present invention together with the following specific embodiments, but do not constitute limitations on the present invention. In the drawings:

FIG. 1 is a scanning electron microscope image of a PVDF coating of a polymer-coated separator of the present invention at 200X;

FIG. 2 is a scanning electron microscope image of the PVDF coating of the polymer-coated separator of the present invention at 1000X;

FIG. 3 is a scanning electron microscope image of the PVDF coating of the polymer-coated separator of the present invention at 10000X;

FIG. 4 is a schematic view of a rotary disc of a high-speed rotary spray coater; and

FIG. 5 is a process flow diagram of a preparation method for the polymer-coated separator with the secondary agglomerates.

## DETAILED DESCRIPTION

The specific embodiments of the present invention will be described below in detail with reference to the accompanying drawings. It should be understood that the specific embodiments described herein are merely illustrative and explanatory of the present invention, and are not intended to limit the present invention.

According to a first aspect of the present invention, provided is a polymer-coated separator with secondary agglomerates, including a separator substrate, and a polymer coating applied on a surface of at least one side of the separator substrate, wherein the polymer coating includes a plurality of randomly distributed spray coating points, the spray coating points including a plurality of polymer secondary agglomerates formed by agglomeration of polymer primary particles;

any one spray coating point in the polymer coating satisfies the following conditions: $25 \leq A/B \leq 40000$, and $100 \leq C/A \leq 10^6$, wherein

A represents a projected area of the polymer secondary agglomerates within the spray coating point on the separator substrate;

B represents a projected area of the polymer primary particles within the spray coating point on the separator substrate; and

C represents a projected area of the spray coating point on the separator substrate; and

$n \times \sum A/S$ means a proportion of effective bonding area on the polymer coating, and satisfies: $4\% \leq n \times \sum A/S \leq 50\%$, wherein

S represents a surface area of the separator substrate;

$\sum A$ represents the sum of projected areas of all polymer secondary agglomerates within the spray coating points on the separator substrate; and

n represents the number of the spray coating points within the area S.

Detailed description is given below:
the separator substrate may be an uncoated substrate or a substrate coated with an inorganic particle layer, without particular limitation.

In the examples of the present invention, the kind of the separator substrate is not particularly limited, and can be selected according to actual requirements; preferably, the separator substrate may be selected from one or more of a polyethylene film, a polypropylene film, a polyimide film, a polyvinylidene fluoride film, a polyvinylidene fluoride-hexafluoropropylene film, a polyamide film, and a polyethylene terephthalate film.

In the examples of the present invention, the kind of the inorganic particles is not particularly limited, and can be selected according to actual requirements: preferably, the inorganic particles may be selected from one or more of silica ($SiO_2$), alumina ($Al_2O_3$), magnesium oxide (MgO), zirconium oxide ($ZrO_2$), titanium oxide ($TiO_2$), calcium oxide (CaO), boehmite (AlOOH), aluminium nitride (AlN), boron nitride (BN), barium sulfate ($BaSO_4$), calcium fluoride ($CaF_2$), and barium fluoride ($BaF_2$).

The separator substrate may have a thickness of 3-25 $\mu$m, preferably 5-16 $\mu$m.

The separator substrate may have a porosity of 20-80%, preferably 30-50%.

Any one spray coating point in the polymer coating of the present invention satisfies the following conditions: $25 \leq A/B \leq 40000$, and $100 \leq C/A \leq 10^6$, wherein A represents a projected area of the polymer secondary agglomerates within the spray coating point on the separator substrate; B represents a projected area of the polymer primary particles within the spray coating point on the separator substrate; and C represents a projected area of the spray coating point on the separator substrate; and

a proportion of effective bonding area on the polymer coating $n \times \sum A/S$ satisfies: $4\% =\leq n \times \sum A/S \leq 50\%$, wherein $\sum A$ represents the sum of projected areas of all polymer secondary agglomerates within any one spray coating point within S on the separator substrate; n represents the number of the spray coating points within S; and S represents a surface area of the separator substrate.

The shapes of the secondary agglomerates and the spray coating points are not particularly limited.

1. A/B represents an aggregation state of primary particles in the polymer secondary agglomerates, when A/B>40000, the polymer secondary agglomerates are too large, and the polymer coating has uneven thickness, and is easily detached, and powder is easily shedded, affecting the local ion permeability of the separator; and when A/B<25, the polymer secondary agglomerates are too small, the bonding strength of the polymer coating is weak, and the electrolyte uptake and retention of the separator are poor.

Wherein A represents the projected area of the polymer secondary agglomerates on the polymer coating, and a test method is as follows: a certain spray coating point is randomly selected, a picture of the spray coating point is taken by a scanning electron microscope at a magnification of 200, and an edge range of the polymer secondary agglomerates is marked by software (e.g. image processing software such as Image J), an area of the range being the projected area of the polymer secondary agglomerates on the polymer coating. A method for marking the edge range of the secondary agglomerates is as follows: a line is drawn around the edge of the secondary agglomerates from a certain point at the edge of the secondary agglomerates, requiring that all line segments have a subtended angle of less than 180° (each line segment has an internal angle of less than 180° with respect to a previous line segment). When the line segments have a subtended angle of more than 180°, the line segment is disconnected and directly connected to a starting point, and the line segments are enclosed into a closed area, that is, a range, an area of which is the projected area of the secondary agglomerates.

In some examples, A ranges from 0.785-314 $\mu$m$^2$.

B represents the projected area of the polymer primary particles on the polymer coating, and a test method is as follows: a certain spray coating point is randomly selected, a picture of the spray coating point is taken by a scanning electron microscope at a magnification of 10000, and a (circular) range of the polymer primary particles can be marked by software (e.g., image processing software such as Image J), an area of the range being the projected area of the polymer primary particles on the polymer coating.

In some examples, B ranges from $7.85 \times 10^{-3}$-0.785 $\mu$m$^2$.

A/B is in the range of $25 \leq A/B \leq 40000$, such as 100-2500, 100-3600, 100-6000, 100-10000, 100-40000 or 200-1600, 200-3600, 200-6000, 200-40000 or 250-6000, 250-8000, 250-10000, 250-40000, etc.

2. C/A represents the distribution of the polymer secondary agglomerates within the spray coating points, when C/A<100, the polymer secondary agglomerates within the spray coating points are too large and small in number, and the polymer coating has uneven thickness, and is easily detached, and powder is easily shedded; and when C/A>10$^6$, effective polymer aggregates within the spray coating points are too few, the coating has poor adhesion properties, the electrolyte uptake and retention are poor, an exposed area of the separator substrate within the spray coating points is small, and the ion penetration perfonnance is poor.

Wherein C represents the projected area of the spray coating point on the polymer coating, and a test method is as follows: a certain spray coating point is randomly selected, a picture of the spray coating point is taken by a scanning electron microscope at a magnification of 200, and a range of the spray coating points can be marked by software (e.g., image processing software such as Image J), an area of the range being the projected area of the spray coating point on the polymer coating.

It should be noted that the same spray coating point is selected for A, B, and C during the test.

In some examples, C ranges from $7.85 \times 10^{-3}$-0.785 mm$^2$.

A is as defined above.

C/A ranges from $100 \leq C/A \leq 10^6$, such as 100-160,000, 600-200,000, 600-300,000, 800-300,000, etc.

3. $n \times \sum A/S$ means the proportion of the effective bonding area on the polymer coating, when $n \times \sum A/S < 4\%$, the effective bonding area is small and the bonding strength is low; and when $n \times \sum A/S > 50\%$, the effective bonding area is large, an exposed area of the substrate is small, the separator has poor permeability, and the ion penetration performance is poor.

Wherein S represents the area of the substrate, n represents the number of the spray coating points within the area S, and a test method is that a finished separator is placed under a lens of a static CCD (e.g., a high-grade GP-300C high-definition electron measuring microscope), a picture is taken under a field of view at a magnification of 3, and an area S of the picture and the number n of the spray coating points in the picture are calculated by image processing software.

$\sum A$ is obtained by selecting any one spray coating point within the area S (preferably, a spray coating point having a D50 of 300-600 $\mu$m), testing a projected area of each secondary agglomerate according to the test method of A, and then summing the projected areas.

$n \times \sum A/S$ ranges, for example, from 10-40%, 10-30%, 10-20%, or 10-15%.

In the examples of the present invention, the polymer coating has a thickness of 0.5-10 $\mu$m, e.g., 0.5 $\mu$m, 1 $\mu$m, 2 $\mu$m, 3 $\mu$m, 4 $\mu$m, 5 $\mu$m... 8 $\mu$m, 9 $\mu$m or 10 $\mu$m. The thickness of the polymer coating is controlled to be in the range of 0.5-10 $\mu$m, if the thickness is too small, the adhesion properties are poor; and if the thickness is too large, the polymer coating has uneven thickness, and is easily detached, and powder is easily shedded, and the ion penetration performance is poor.

In the examples of the present invention, the polymer-coated separator has a bonding strength of 1.0 N/m or more to a ternary positive electrode, for example, the bonding strength of the polymer coating to a ternary positive electrode piece is 1 N/m... 4 N/m, 4.2 N/m, 4.5 N/m, 4.6 N/m, 4.8 N/m, 5 N/m,....

In the examples of the present invention, the polymer-coated separator has a bonding strength of 0.5 N/m or more to a graphite negative electrode piece, for example, the bonding strength of the polymer-coated separator to the graphite negative electrode piece is 0.5 N/m... 4 N/m, 4.2 N/m, 4.5 N/m, 4.6 N/m, 4.8 N/m, 5 N/m,....

The bonding strength of the polymer-coated separator to a battery electrode piece can be tested by using methods well known in the art. As a specific example, a test method of the bonding strength may be as follows: a polymer coating of a battery separator and the ternary positive electrode or the graphite negative electrode are stacked together, and hot-pressed with a hot press, and then the 180-degree peel strength is tested as the bonding strength by a tensile tester, wherein the tensile tester has a speed of 50 mm/min; and the conditions of the hot pressing are preferably a hot pressing temperature of 90°C, a hot pressing pressure of 6.5 MPa and a hot pressing time of 60 s.

In the examples of the present invention, the polymer-coated separator has an ionic conductivity of 80%-110%, e.g., 81%, 82%, 85%, 90%... or 110% of an ionic conductivity of the separator substrate.

The ionic conductivity of the separator can be tested by using methods well known in the art. As a specific example, a test method of the ionic conductivity may be as follows: the ionic conductivity of the separator may be calculated by a formula $\sigma_s = \dfrac{d}{R_s S}$, wherein $\sigma_s$ is a conductivity of the separator, Rs is a resistance of the separator, d is a thickness of the separator, and S is an effective area of the separator;

in the examples of the present invention, the polymer-coated separator has an electrolyte uptake rate of 70% or more, such as 70%, 80%, 90%, or 95%, and an electrolyte retention rate of 70% or more, such as 70%, 80%, 90%, or 95%; and

the electrolyte uptake rate and the electrolyte retention rate of the separator can be tested by using methods well known in the art. As a specific example, a test method for the electrolyte uptake rate and the electrolyte retention rate may be as follows: determination is carried out with reference to QB/T 2303.11-2008 "Paste coated paper separator for batteries--Part 11: Determination of electrolyte absorbency". A separator sample of 50 mm$\times$50 mm is cut and weighed as m0, the separator sample is immersed in a beaker containing an electrolyte for 1 h, and taken out, the separator sample is suspended for 3 min to drip the electrolyte away, the separator sample with the electrolyte dripped away is weighed as m, and then the separator sample is allowed to stand at room temperature for 1 h, and weighed as ml. The electrolyte uptake rate X and the electrolyte retention rate Y of a separator for a lithium-ion battery can be calculated by the following formulas:

$$X = \frac{m - mo}{mo} \times 100\%$$

$$Y = \frac{m1 - m}{m} \times 100\%$$

in the formulas, m0 is a mass of the separator before soaking, m is a mass of the separator after soaking, and m1 is a mass after standing at room temperature for 1 h.

In the examples of the present invention, the polymer-coated separator has a powder shedding rate of 5% or less, such as 4%, 3%, 2%, or 1%.

The powder shedding rate mainly characterizes a situation that powders fall from the sprayed-and-coated polymer coating, the powder shedding from a separator will result a decrease in the adhesion of the separator, and there is a risk of unsolid hot pressing, and a specific test method is as follows: a roll of a finished separator with sprayed-and-coated polymer is taken, and weighed as m0, and the separator is placed on a slitter for running, and weighed as m1 after being rolled, then the powder shedding rate P=(m0-m1)/m0×100%.

In the examples of the present invention, the polymer coating includes the following components: 80-100 parts by mass a polymer; 2-20 parts by mass a binder; and 0.01-3 parts by mass a dispersant.

In the examples of the present invention, the polymer with the secondary agglomerates includes at least one selected from a polyvinylidene fluoride homopolymer (PVDF), a polyvinylidene fluoride-trifluoroethylene copolymer (PVDF-TrFE), a polyvinylidene fluoride-methyl methacrylate copolymer (PVDF-PMMA), a polyvinylidene fluoride-hexafluoropropylene copolymer (PVDF-HFP), a polyvinylidene fluoride-acrylic acid copolymer, polymethyl methacrylate (PMMA), polyethylene (PE), and an acrylate polymer.

The polymer with the secondary agglomerates according to the present invention refers mainly to its solid form.

In some examples, a primary particle size of the polymer ranges from 0.1 $\mu$m to 1 $\mu$m, and a B value is controlled by selecting different types of polymers (such as PVDF resin).

In the examples of the present invention, the kind of the binder is not particularly limited, and can be selected according to actual requirements; preferably, the binder may be selected from one or more of carboxymethylcellulose, hydroxyethylcellulose, polyacrylic acid, polymethacrylic acid, polymethyl methacrylate, and an acrylonitrile multipolymer.

In the examples of the present invention, the kind of the dispersant is not particularly limited and can be selected according to actual requirements; preferably, the dispersant may be selected from one or more of an ethylene-acrylic acid copolymer, an ethylene-vinyl acetate copolymer, acrylic acid-polyurethane and polyethylene glycol.

The battery separator provided by the examples of the present invention can be used for different kinds of batteries, and thus the kind of batteries is not particularly limited and can be selected according to actual requirements. Preferably, the separator can be used in secondary batteries, particularly secondary batteries containing a liquid electrolyte, such as lithium-ion batteries, sodium-ion batteries, and the like.

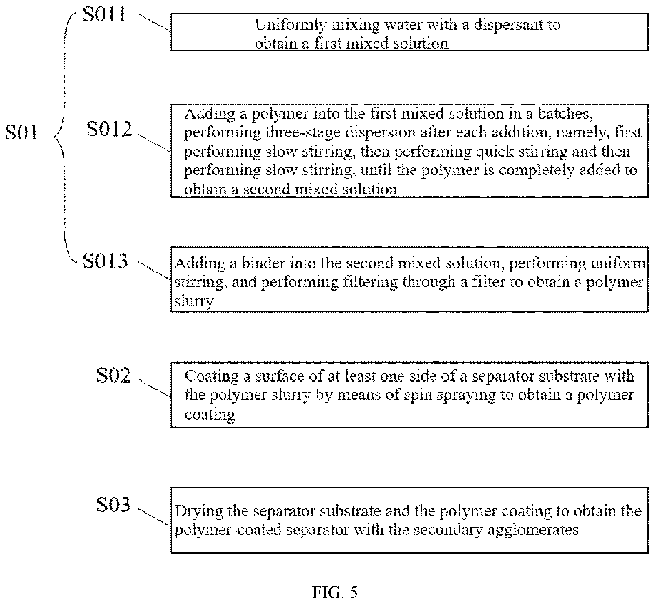

In a second aspect of the present invention, provided is a preparation method for the polymer-coated separator with the secondary agglomerates, as shown in FIG. 5, including:

S01, uniformly mixing a dispersant with water, then adding a polymer in a batches, a mass of the polymer added each time being 1/a of a total amount, each time after adding the polymer, first performing slow stirring, then performing quick stirring and then performing slow stirring, until the polymer is completely added, wherein a≥2; optionally performing grinding treatment, finally adding a binder, and performing uniform mixing and filtering to obtain a polymer slurry;

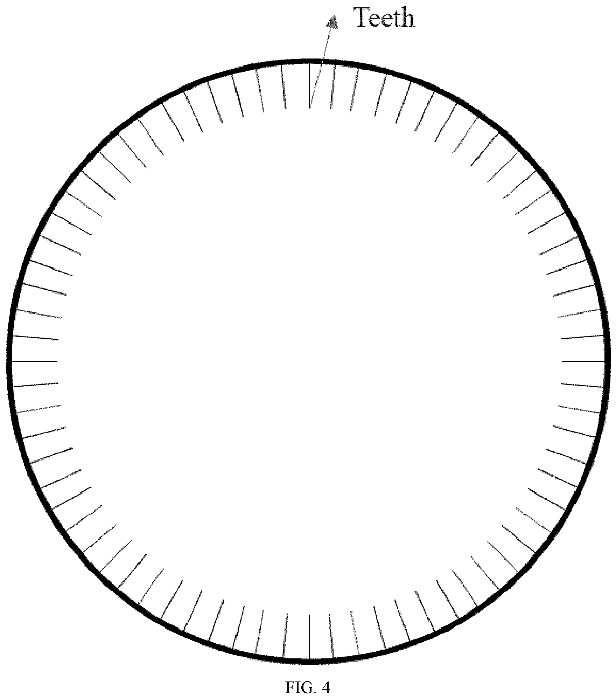

S02, coating a surface of at least one side of a separator substrate with the polymer slurry by means of spin spraying to obtain a polymer coating with spray coating points, wherein spin spraying parameters: a coating speed of 100 m/min-300 m/min, a slurry spraying flow rate being 1500 mL/min-15000 mL/min, a rotational speed of the spraying being 5000 rpm-15000 rpm, the number of teeth of a rotary disc for the spraying being 200 teeth to 600 teeth (a schematic view of a rotary disk of a high-speed rotary spray coater is shown in FIG. 4), and a distance from the rotary disc to a membrane surface being 20 cm-50 cm; and

S03, drying the separator substrate and the polymer coating to obtain the polymer-coated separator with the secondary agglomerates.

In the examples of the present invention, the step S01 in the above preparation method may further include:

S011, uniformly mixing the water with the dispersant to obtain a first mixed solution;
S012, adding the polymer into the first mixed solution in a batches, the amount of the polymer added each time being 1/a of the total amount, after each addition, performing first-stage dispersion: wherein a stirring rotational speed is 100 rpm-600 rpm, and a stirring time is 10 min-50 min, and then performing second-stage dispersion: wherein a stirring rotational speed is 1000 rpm-2000 rpm, and a stirring time is 30 min-180 min, and \finally performing third-stage dispersion: wherein a stirring rotational speed is 100 rpm-600 rpm, and a stirring time is 10 min-50 min, until the polymer is completely added to obtain a second mixed solution; and

S013, adding the binder into the second mixed solution, performing uniform stirring, and performing filtering through a 40-300-mesh filter (undispersed PVDF large particles may be sieved out by the filtering) to obtain the polymer slurry.

The addition in batches can make PVDF resin better dispersed, first slow stirring prevents the PVDF powder from being scattered during the mixing process, and then quick stirring accelerates the mixing of PVDF in the water, and a desired size of a PVDF slurry (secondary particles) can be obtained by controlling the addition times of the PVDF resin, the rotational speed and time of the slow stirring and the quick stirring, and the size of the filter, thereby adjusting the range of A/B.

In some examples, the obtained polymer slurry has a particle size D10 of 1-4 $\mu$m and a particle size D90 of 6-20 $\mu$m (controlling the range of an A value). The particle size D10 and D90 of the slurry can be tested by using a laser particle size analyzer.

The size of C is adjusted by adjusting the spray coating speed, the slurry flow rate, the number of the teeth of the rotary disc for the spraying, and the distance from the rotary disc to the membrane surface to adjust the C/A.

The proportion of the effective bonding area $n \times \sum A/S$ is adjusted by adjusting the A, and the slurry spraying flow rate.

In some examples, the resulting spray coating points have a D10 of 100 $\mu$m to 300 $\mu$m and a D90 of 800 $\mu$m to 1000 $\mu$m.

A test method for the D10 and the D90 of the spray coating points may be as follows: a finished separator is placed under a lens of a static CCD, a picture is taken under a field of view at a magnification of 3, and the number n of the spray coating points in the picture, and the size of each spray coating point are calculated by using image processing software to statistically obtain the D10 and the D90 of the spray coating points.

In the examples of the present invention, the separator substrate and a PVDF coating are treated by conventional drying.

In the examples of the present invention, the drying is performed at a temperature of 50-90°C.

According to the method provided by the second aspect of the examples of the present invention, the polymer-coated separator with the secondary agglomerates according to any example of the first aspect of the present invention may be obtained. Obtaining the polymer-coated separator with the secondary agglomerates according to any example of the first aspect of the present invention is not limited to the preparation method provided by the second aspect of the examples of the present invention.

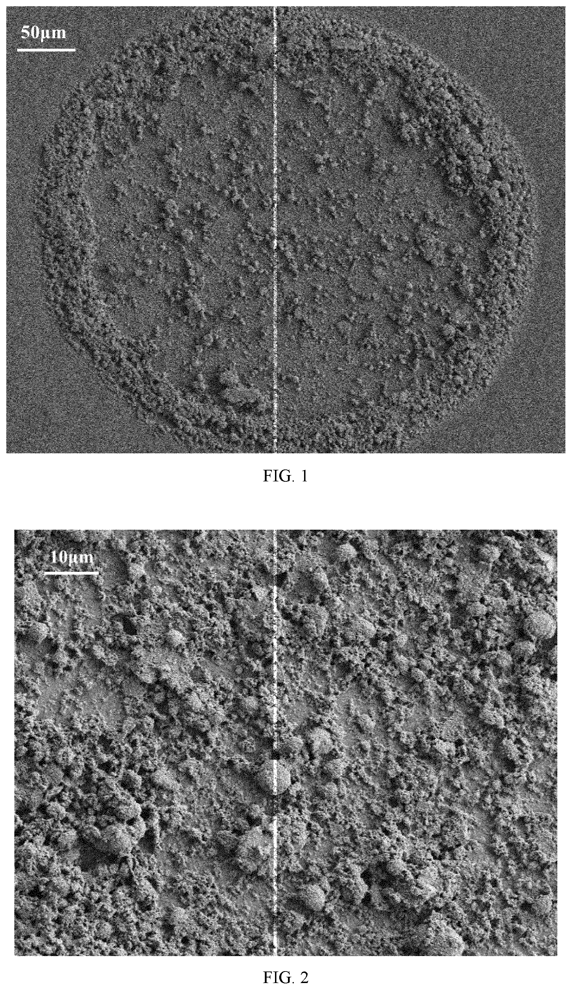

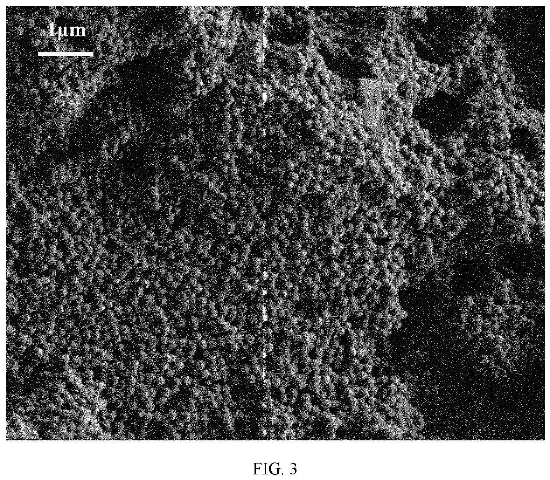

FIGS. 1 to 3 show scanning electron microscope images of the PVDF coating of the coated separator at different magnifications (Model: SIGMA 300, an accelerating voltage EHT=1 kV, a working distance WD=5.8-6.1 mm, and using an SE2 detector).

According to a third aspect of the present invention, provided is a battery, including the polymer-coated separator with the secondary agglomerates according to the first aspect of the examples of the present invention or the polymer-coated separator with the secondary agglomerates prepared by the preparation method according to the second aspect of the examples of the present invention.

In the examples of the present invention, the battery is a lithium-ion secondary battery or a sodium-ion secondary battery.

The present invention will be described below with reference to specific examples, and it should be understood that these examples are merely descriptive and do not limit the present invention in any way.

Unless otherwise specified, raw materials, reagents, methods and the like used in the examples are conventional raw materials, reagents, and methods in the art.

The high-speed rotary spray coater is a DS-800-01 PCS separator spray coater from Hong Kong Yuanbiao, China.

Example 1: Preparation of a water-based PVDF spraying slurry: 57 kg of water and 0.025 kg of a dispersant were weighed, and stirred at 500 rpm for 30 min to obtain a first mixed solution; 5 kg of PVDF-HFP resin (HEVER2601 having a primary particle size of 0.1-0.3 $\mu$m from HEC) was added into the first mixed solution in 2 batches, the addition amount each time being 2.5 kg, each time after addition of the PVDF-HFP resin, slow stirring was first perfonned at 300 rpm for 30 min, then quick stirring was performed at 1000 rpm for 60 min, and finally slow stirring was performed at 300 rpm for 20 min, until the PVDF-HFP resin was completely added to obtain a second mixed solution; and next, 0.25 kg of a polyacrylic acid binder was added into the second mixed solution, and stirring was performed at 50 rpm for 30 min to obtain a third mixed solution, and finally the third mixed solution was filtered through a 200-mesh filter to obtain the PVDF spraying slurry having a D10 of 2.1 $\mu$m, and a D90 of 7.6 $\mu$m.

Coating: the prepared PVDF spraying slurry was fed into a feeding tank of a high-speed rotary spray coater by an automatic feeding system to be applied on a surface of one side of a 9 $\mu$m polyethylene base film with a porosity of 50% which was obtained by a wet method by means of spin spraying, wherein a coating speed was 150 m/min, the number of teeth of a rotary disc for the spraying was 360, a distance from the rotary disc to a surface of the film was 25 cm, a slurry spraying flow rate was 5000 mL/min, and a rotational speed of the spraying was 9000 rpm; and drying was performed at 60°C to obtain a water-based PVDF-coated separator.

The spray coating points obtained after coating have a D10 of 200 $\mu$m and a D90 of 800 $\mu$m.

A stacking state A/B of PVDF secondary agglomerates of the coated separator, a stacking state C/A of the spray coating points, an effective bonding area, and the performance and parameters of the separator are shown in Table 1-1 below.

Example 2: Preparation of a water-based PVDF spraying slurry: 57 kg of water and 0.0025 kg of a dispersant were weighed, and stirred at 500 rpm for 30 min to obtain a first mixed solution; 5 kg of PVDF-HFP resin (LBG having a primary particle size of 0.15-0.2 $\mu$m from a manufacturer Arkema) was added into the first mixed solution in 3 batches, the addition amount each time being 1.667 kg, each time after addition of the PVDF-HFP resin, slow stirring was first perfonned at 500 rpm for 30 min, then quick stirring was performed at 1500 rpm for 90 min, and finally slow stirring was performed at 500 rpm for 30 min, until the PVDF-HFP resin was completely added to obtain a second mixed solution; and next, 0.25 kg of a polyacrylic acid binder was added into the second mixed solution, and stirring was performed at 50 rpm for 30 min to obtain a third mixed solution, and finally the third mixed solution was filtered through a 300-mesh filter to obtain the PVDF spraying slurry having a D10 of 1.6 $\mu$m, and a D90 of 7.2 $\mu$m.

Coating: the prepared PVDF spraying slurry was fed into a feeding tank for spraying by an automatic feeding system to be applied on a surface of one side of a 9 $\mu$m polyethylene base film with a porosity of 50% which was obtained by a wet method by means of spin spraying, wherein a coating speed was 200 m/min, the number of teeth of a dispersion disc for the spraying was 450, a distance from a rotary disc to a separator substrate was 25 cm, a slurry spraying flow rate was 7500 mL/min, and a rotational speed of the spraying was 9000 rpm; and drying was perfonned at 85°C to obtain a water-based PVDF-coated separator.

The spray coating points obtained after coating have a D10 of 150 $\mu$m and a D90 of 850 $\mu$m.

A stacking state A/B of PVDF secondary agglomerates of the coated separator, a stacking state C/A of the spray coating points, an effective bonding area, and the performance and parameters of the separator are shown in Table 1-1 below.

Example 3: Preparation of a water-based PMMA spraying slurry: 82.75 kg of water and 0.009 kg of a dispersant were weighed, and stirred at 300 rpm for 30 min to obtain a first mixed solution; 15 kg of PMMA powder (from a manufacturer Yindile, having a primary particle size of 0.2-0.5 $\mu$m) was added into the first mixed solution in 3 batches, the addition amount each time being 5 kg, each time after addition of the PMMA powder, slow stirring was first perfonned at 400 rpm for 30 min, then quick stirring was performed at 1200 rpm for 80 min, and finally slow stirring was performed at 500 rpm for 30 min, until the PMMA powder was completely added to obtain a second mixed solution; and next, 2.25 kg of a polyacrylic acid binder (having a solid content of 40%) was added into the second mixed solution, and stirring was performed at 20 rpm for 30 min to obtain a third mixed solution, and finally the third mixed solution was filtered through a 150-mesh filter to obtain the water-based PMMA spraying slurry having a D10 of 1.7 $\mu$m and a D90 of 14.1 $\mu$m.

Coating: the prepared spraying slurry was fed into a feeding tank for spraying by an automatic feeding system to be applied on a surface of one side of a 9 $\mu$m polyethylene base film with a porosity of 50% which was obtained by a wet method by means of spin spraying, wherein a coating speed was 150 m/min, the number of teeth of a dispersion disc for the spraying was 360, a distance from a rotary disc to a separator substrate was 25 cm, a slurry spraying flow rate was 4000 mL/min, and a rotational speed of the spraying was 9000 rpm; and drying was perfonned at 80°C to obtain a water-based PMMA-coated separator.

The spray coating points obtained after coating have a D10 of 210 $\mu$m and a D90 of 800 $\mu$m.

A stacking state A/B of PMMA secondary agglomerates of the coated separator, a stacking state C/A of the spray coating points, an effective bonding area, and the performance and parameters of the separator are shown in Table 1-1 below.

Example 4: Preparation of a water-based PVDF-PMMA copolymer spraying slurry: 45 kg of water and 0.015 kg of a dispersant were weighed, and stirred at 500 rpm for 30 min to obtain a first mixed solution; 5 kg of PVDF-PMMA powder (having a primary particle size of 0.2-0.4 $\mu$m) was added into the first mixed solution in 2 batches, the addition amount each time being 2.5 kg, each time after addition of the PMMA powder, slow stirring was first performed at 600 rpm for 30 min, then quick stirring was performed at 1800 rpm for 100 min, and finally slow stirring was perfonned at 600 rpm for 30 min, until the PVDF-PMMA powder was completely added to obtain a second mixed solution; and next, 1.25 kg of a polyacrylic acid binder (having a solid content of 40%) was added into the second mixed solution, and stirring was performed at 20 rpm for 30 min to obtain a third mixed solution, and finally the third mixed solution was filtered through a 100-mesh filter to obtain the water-based PVDF-PMMA spraying slurry having a D10 of 2.3 $\mu$m and a D90 of 12.5 $\mu$m.

Coating: the prepared spraying slurry was fed into a feeding tank for spraying by an automatic feeding system to be applied on a ceramic membrane surface of a 7+2 ceramic coated membrane by means of spin spraying, wherein 7 refers to a 7 μm polyethylene base membrane with a porosity of 40% which is obtained by a wet method, and 2 refers to a ceramic coating of 2 μm, a coating speed was 100 m/min, the number of teeth of a dispersion disc for the spraying was 360, a distance from a rotary disc to a separator substrate was 25 cm, a slurry spraying flow rate was 2200 mL/min, and a rotational speed of the spraying was 8500 rpm; and drying was perfonned at 65°C to obtain a water-based PVDF-PMMA-coated separator.

The spray coating points obtained after coating have a D10 of 230 μm and a D90 of 820 μm.

A stacking state A/B of PVDF-PMMA secondary agglomerates of the coated separator, a stacking state C/A of the spray coating points, an effective bonding area, and the performance and parameters of the separator are shown in Table 1-1 below.

Example 5: Preparation of a water-based PVDF-PMMA copolymer spraying slurry: the same as that in Example 4.

Coating: the prepared spraying slurry was fed into a feeding tank for spraying by an automatic feeding system to be applied on both sides of a 7+2 ceramic coated membrane by means of spin spraying, wherein 7 refers to a 7 μm polyethylene base membrane with a porosity of 40% which is obtained by a wet method, and 2 refers to a ceramic coating of 2 μm, a coating speed was 100 m/min, the number of teeth of a dispersion disc for the spraying was 360, a distance from a rotary disc to a separator substrate was 25 cm, a slurry spraying flow rate was 2200 mL/min, and a rotational speed of the spraying was 8500 rpm; and drying was performed at 65°C to obtain a water-based PVDE-PMMA-coated separator.

The spray coating points obtained after coating have a D10 of 230 μm and a D90 of 820 μm.

A stacking state A/B of PVDF-PMMA secondary agglomerates of the coated separator, a stacking state C/A of the spray coating points, an effective bonding area, and the performance and parameters of the separator are shown in Table 1-1 below.

Comparative example 1: Preparation of a water-based PVDF spraying slurry: 52 kg of water and 0.3 kg of a dispersant were weighed, and stirred for 30 min to obtain a first mixed solution; 20 kg of a PVDF-HFP emulsion (having a primary particle size of 0.15-0.2 μm) having a solid content of 30% was added into the first mixed solution, and uniform mixing was perfonned under stirring at 200 rpm for 30 min to obtain a second mixed solution; and 0.5 kg of a polyacrylic acid binder was added into the second mixed solution, and stirring was performed for 30 min to obtain the PVDF spraying slurry having a D10 of 0.15 μm and a D90 of 0.6 μm.

Coating: the prepared PVDF spraying slurry was fed into a feeding tank for spraying by an automatic feeding system to be applied on a surface of one side of a 12 μm polyethylene base film with a porosity of 50% which was obtained by a wet method by means of spin spraying, wherein a coating speed was 100 m/min, the number of teeth of a dispersion disc for the spraying was 450, a distance from a rotary disc to a separator substrate was 30 cm, a slurry spraying flow rate was 3200 mL/min, and a rotational speed of the spraying was 7200 rpm; and drying was perfonned at 85°C to obtain a water-based PVDF-coated separator.

The spray coating points obtained after coating have a D10 of 100 μm and a D90 of 600 μm.

A stacking state A/B of PVDF secondary agglomerates of the coated separator, a stacking state C/A of the spray coating points, an effective bonding area, and the performance and parameters of the separator are shown in Table 1-2 below.

Comparative example 2: Preparation of a water-based PVDF spraying slurry: 57 kg of water and 0.0025 kg of a dispersant were weighed, and stirred for 30 min to obtain a first mixed solution; 5 kg of PVDF resin powder (having a primary particle size of 0.15-0.2 μm) was added into the first mixed solution, slow stirring was first performed at 200 rpm for 50 min, then stirring was performed at 600 rpm for 60 min, and finally stirring was performed at 200 rpm for 30 min to be uniformly mixed to obtain a second mixed solution, then 0.25 kg of a polyacrylic acid binder was added into the second mixed solution, and then stirring was perfonned at 50 rpm for 30 min to obtain a third mixed solution, without filtering, the obtained PVDF spraying slurry having a D10 of 3.8 μm and a D90 of 35 μm.

Coating: the prepared PVDF spraying slurry was fed into a feeding tank for spraying by an automatic feeding system to be applied on a surface of one side of a 9 μm polyethylene base film with a porosity of 50% which was obtained by a wet method by means of spin spraying, wherein a coating speed was 150 m/min, the number of teeth of a dispersion disc for the spraying was 450, a distance from a rotary disc to a separator substrate was 25 cm, a slurry spraying flow rate was 5000 mL/min, and a rotational speed of the spraying was 12000 rpm.

The spray coating points have a D10 of 80 μm and a D90 of 600 μm.

A stacking state A/B of PVDF secondary agglomerates of the coated separator, a stacking state C/A of the spray coating points, an effective bonding area, and the performance and parameters of the separator are shown in Table 1-2 below.

Comparative example 3: Preparation of a water-based PVDF spraying slurry: the same as that in Example 1.

Coating: the prepared PVDF spraying slurry was applied on a surface of one side of a 9 μm polyethylene base film with a porosity of 50% which was obtained by a wet method by means of spin spraying, wherein a coating speed was 200 m/min, the number of teeth of a dispersion disc for the spraying was 800, a distance from a rotary disc to a separator substrate was 25 cm, a slurry spraying flow rate was 9000 mL/min, and a rotational speed of the spraying was 17000 rpm;

and drying was performed at 85°C to obtain a polymer-coated separator with secondary agglomerates.

The spray coating points obtained after coating have a D10 of 50 $\mu$m and a D90 of 300 $\mu$m.

A stacking state A/B of PVDF secondary agglomerates of the coated separator, a stacking state C/A of the spray coating points, an effective bonding area, and the performance and parameters of the separator are shown in Table 1-2 below.

Comparative example 4: Preparation of a water-based PVDF spraying slurry: 57 kg of water and 0.0025 kg of a dispersant were weighed, and stirred at 500 rpm for 30 min to obtain a first mixed solution; 5 kg of PVDF-HFP resin (having a primary particle size of 0.15-0.2 $\mu$m) was added into the first mixed solution in 5 batches, the addition amount each time being 1 kg, each time after addition of the PVDF-HFP resin, slow stirring was performed at 500 rpm for 30 min, then quick stirring was performed at 2500 rpm for 100 min, and finally slow stirring was performed at 500 rpm for 30 min, the above operations were repeated until the PVDF-HFP resin was completely and uniformly mixed to obtain a second mixed solution; and next, 0.25 kg of a polyacrylic acid binder was added into the second mixed solution, and stirring was performed at 50 rpm for 30 min to obtain a third mixed solution, and finally the third mixed solution was filtered through a 300-mesh filter to obtain the PVDF spraying slurry having a D10 of 1.2 $\mu$m and a D90 of 5.6 $\mu$m.

Coating: the prepared PVDF spraying slurry was applied on a surface of one side of a 9 $\mu$m polyethylene base film with a porosity of 50% which was obtained by a wet method by means of spin spraying, wherein a coating speed was 200 m/min, the number of teeth of a dispersion disc for the spraying was 280, a distance from a rotary disc to a separator substrate was 25 cm, a slurry spraying flow rate was 6000 mL/min, and a rotational speed of the spraying was 4000 rpm. Drying was performed at 85°C to obtain a polymer-coated separator with secondary agglomerates, the obtained spray coating points having a D10 of 350 $\mu$m and a D90 of 1500 $\mu$m.

A stacking state A/B of PVDF secondary agglomerates of the coated separator, a stacking state C/A of the spray coating points, an effective bonding area, and the performance and parameters of the separator are shown in Table 1-2 below.

Comparative example 5: Preparation of a water-based PVDF spraying slurry: the same as that in Comparative example 2.

Coating: the same as that in Comparative example 3.

A stacking state A/B of PVDF secondary agglomerates of the coated separator, a stacking state C/A of the spray coating points, an effective bonding area, and the performance and parameters of the separator are shown in Table 1-2 below.

Comparative example 6: Preparation of a water-based PVDF spraying slurry: the same as that in Comparative example 4.

Coating: the prepared PVDF spraying slurry was applied on a surface of one side of a 9 $\mu$m polyethylene base film with a porosity of 50% which was obtained by a wet method by means of spin spraying, wherein a coating speed was 300 m/min, the number of teeth of a dispersion disc for the spraying was 180, a distance from a rotary disc to a separator substrate was 15 cm, a slurry spraying flow rate was 16000 mL/min, and a rotational speed of the spraying was 4500 rpm. Drying was performed at 85°C to obtain a polymer-coated separator with secondary agglomerates, the obtained spray coating points having a D10 of 450 $\mu$m and a D90 of 2000 $\mu$m.

A stacking state A/B of PVDF secondary agglomerates of the coated separator, a stacking state C/A of the spray coating points, an effective bonding area, and the performance and parameters of the separator are shown in Table 1-3 below.

Comparative example 7: Preparation of a water-based PVDF spraying slurry: the same as that in Comparative example 2.

Coating: the prepared PVDF spraying slurry was applied on a surface of one side of a 9 $\mu$m polyethylene base film with a porosity of 50% which was obtained by a wet method by means of spin spraying, wherein a coating speed was 150 m/min, the number of teeth of a dispersion disc for the spraying was 300, a distance from a rotary disc to a separator substrate was 15 cm, a slurry spraying flow rate was 1000 mL/min, and a rotational speed of the spraying was 6000 rpm. Drying was performed at 80°C to obtain a polymer-coated separator with secondary agglomerates, the obtained spray coating points having a D10 of 220 $\mu$m and a D90 of 1000 $\mu$m.

A stacking state A/B of PVDF secondary agglomerates of the coated separator, a stacking state C/A of the spray coating points, an effective bonding area, and the performance and parameters of the separator are shown in Table 1-3 below.

Test section

The PVDF coatings and battery separators in the above Examples 1-5 and Comparative examples 1-7 were subjected to relevant performance tests, and the test results are shown in Tables 1-1, 1-2, and 1-3 below.

Table 1-1

| Item | Unit | Example 1 | Example 2 | Example 3 | Example 4 | Example 5 |
|---|---|---|---|---|---|---|
| Primary particle size | μm | 0.1-0.3 | 0.15-0.2 | 0.2-0.5 | 0.2-0.4 | 0.2-0.4 |
| D10 of slurry | μm | 2.1 | 1.6 | 1.7 | 2.3 | 2.3 |
| D90 of slurry | μm | 7.6 | 7.2 | 14.1 | 12.5 | 12.5 |
| D10 of spray coating point | μm | 200 | 150 | 210 | 230 | 230 |
| D90 of spray coating point | μm | 800 | 850 | 800 | 820 | 820 |
| A/B | / | 110-5770 | 110-2300 | 81-4970 | 58-3900 | 58-3900 |
| C/A | / | $692\text{-}1.4\times10^5$ | $416\text{-}2.82\times10^5$ | $221\text{-}2.2\times10^5$ | $400\text{-}1.2\times10^5$ | $400\text{-}1.2\times10^5$ |
| Coating amount | g/m$^2$ | 0.6 | 0.6 | 0.6 | 0.3 | 0.3 |
| Coating thickness | μm | 4 | 3.2 | 5.1 | 2.2 | 2.2 |
| Proportion of effective bonding area | % | 12 | 10.5 | 12 | 7 | 7 |
| Bonding strength to positive electrode | N/m | 6 | 6.6 | 22.4 | 5.9 | 5.9 |
| Bonding strength to negative electrode | N/m | 1.5 | 1.9 | 15.8 | 3.7 | 3.7 |
| Powder shedding rate | % | 1.2 | 0.9 | 2.8 | 0.5 | 0.5 |
| Ionic conductivity of separator/ionic conductivity of substrate | % | 97 | 96 | 95 | 92 | 84 |
| Electrolyte uptake rate | % | 85 | 88 | 94 | 90 | *95* |
| Electrolyte retention rate | % | 80 | 85 | 89 | 86 | 85 |

Table 1-2

| Item | Unit | Comparative example 1 | Comparative example 2 | Comparative example 3 | Comparative example 4 | Comparative example 5 |
|---|---|---|---|---|---|---|
| Primary particle size | μm | 0.15-0.2 | 0.15-0.2 | 0.1-0.3 | 0.15-0.2 | 0.15-0.2 |
| D10 of slurry | μm | 0.15 | 3.8 | 2.1 | 0.8 | 3.8 |
| D90 of slurry | μm | 0.6 | 35 | 7.6 | 5.6 | 35 |
| D10 of spray coating point | μm | 100 | 80 | 50 | 350 | 50 |
| D90 of spray coating point | μm | 600 | 600 | 300 | 1500 | 300 |
| A/B | / | 1-16 | 360-54300 | 110-5770 | 64-1390 | 360-54300 |
| C/A | / | $2.8\times10^4\text{-}1.6\times10^7$ | $100\text{-}2.49\times10^4$ | $42\text{-}2.3\times10^4$ | $3900\text{-}1.5\times10^6$ | 25-6200 |
| Coating amount | g/m$^2$ | 0.6 | 0.6 | 0.6 | 0.6 | 0.6 |
| Coating thickness | μm | 1.0 | 10 | 7 | 1.7 | *15* |

(continued)

| Item | Unit | Comparative example 1 | Comparative example 2 | Comparative example 3 | Comparative example 4 | Comparative example 5 |
|---|---|---|---|---|---|---|
| Proportion of effective bonding area | % | 30 | 9 | 24 | 18 | 23 |
| Bonding strength to positive electrode | N/m | 7.2 | 1.5 | 5.1 | 3.7 | 1.7 |
| Bonding strength to negative electrode | N/m | 1.2 | 0.2 | 0.9 | 0.9 | 0.2 |
| Powder shedding rate | % | 0.5 | 6 | 5.2 | 0.8 | 10 |
| Ionic conductivity of separator/ionic conductivity of substrate | % | 70 | 75 | 73 | 75 | 67 |
| Electrolyte uptake rate | % | 76 | 90 | 92 | 80 | 93 |
| Electrolyte retention rate | % | 71 | 88 | 89 | 73 | 90 |

Table 1-3

| Item | Unit | Comparative example 6 | Comparative example 7 |
|---|---|---|---|
| Primary particle size | $\mu$m | 0.15-0.2 | 0.15-0.2 |
| D10 of slurry | $\mu$m | 1.2 | 3.8 |
| D90 of slurry | $\mu$m | 5.6 | 35 |
| D10 of spray coating point | $\mu$m | 450 | 220 |
| D90 of spray coating point | $\mu$m | 2000 | 1000 |
| A/B | / | 64-1390 | 360-54300 |
| C/A | / | $1600-2.7\times10^6$ | $38-6.9\times10^3$ |
| Coating amount | g/m$^2$ | 1.8 | 0.12 |
| Coating thickness | $\mu$m | 2.0 | 3.2 |
| Proportion of effective bonding area | % | 78 | 2.5 |
| Bonding strength to positive electrode | N/m | 12 | 0.5 |
| Bonding strength to negative electrode | N/m | 7.1 | 0.1 |
| Powder shedding rate | % | 3 | 8 |
| Ionic conductivity of separator/ionic conductivity of substrate | % | 65 | 90 |
| Electrolyte uptake rate | % | 85 | 77 |
| Electrolyte retention rate | % | 82 | 72 |

As can be seen from the results of the examples and the comparative examples, in Examples 1-5, A/B, C/A, and n×ΣA/S are all within a given range, and the adhesion properties, the ionic conductivity, the electrolyte uptakelretention rate and the powder shedding rate can be effectively balanced to achieve the optimal effect; in Comparative example 1, the PVDF-HFP emulsion was used, there was no secondary agglomerate structure, A/B was small and C/A was large, and although the adhesion properties were high, the ionic conductivity and the electrolyte uptake and retention are poor; in Comparative example 2, one-time feeding and dispersion were performed during preparation of the slurry, and the stirring rotational speed was excessively small, the dispersion performance of the powder in the water was poor, and finally the slurry was not treated by filtration, so PVDF particles in the slurry were large in particle size and wide in distribution range, A/B was large, C/A was normal, the adhesion properties and ion permeability were poor, the powder shedding rate was significantly increased, and powder shedding of the coating was severe; in Comparative example 3, the secondary agglomerates were normal, the dispersion disc with 800 teeth was used, the rotational speed of the spraying was 17000 rpm, so that the spray coating points were excessively small, A/B was normal, C/A was small, the stacking of the spray coating points was high, the bonding strength had no obvious change, but the ionic conductivity was obviously decreased, and the powder shedding rate was increased; in Comparative example 4, the PVDF powder was added in 5 batches during slurry preparation, stirring was performed at a ultra high speed, the PVDF secondary agglomerates were obtained, the rotational speed was low, the number of the teeth of the rotary disc was small, the spray coating points were large, A/B was small, C/A was large, both the adhesion and the ionic conductivity were decreased, and the electrolyte uptake rate and the electrolyte retention rate were significantly decreased; in Comparative example 5, the secondary agglomerates were large, the spray coating points were small, A/B was large, C/A was small, both the adhesion and the ionic conductivity became worse, and the powder shedding rate was significantly improved; in Comparative example 6, the spraying flow rate was excessively large, the number of the teeth of the rotary disc was excessively small, the coating amount was high, and the spray coating points were excessively large, so that $n \times \sum A/S$ was excessively large, and the ion conductivity was significantly decreased; and in Comparative example 7, the spraying flow rate was excessively small, the particle size of the slurry was excessively large, and the coating amount was small, so that $n \times \sum A/S$ was excessively small, and the bonding strength of the coating to the positive electrode piece and the negative electrode piece was significantly decreased.

As can be seen from the results of the examples and the comparative examples, the polymer-coated separator has high adhesion, high ion permeability, high electrolyte uptake and retention, and low powder shedding rate only when A/B, C/A and $n \times \sum A/S$ are all within the given range.

## Claims

1. A polymer-coated separator with secondary agglomerates, comprising:

   a separator substrate, and
   a polymer coating applied on a surface of at least one side of the separator substrate, wherein
   the polymer coating comprises a plurality of randomly distributed spray coating points, the spray coating points comprising a plurality of polymer secondary agglomerates formed by agglomeration of polymer primary particles;
   **characterized in that**
   any one spray coating point in the polymer coating satisfies the following conditions: $25 \leq A/B \leq 40000$, and $100 \leq C/A \leq 10^6$, wherein
   A represents a projected area of the polymer secondary agglomerates within the spray coating point on the separator substrate;
   B represents a projected area of the polymer primary particles within the spray coating point on the separator substrate; and
   C represents a projected area of the spray coating point on the separator substrate; and
   $n \times \sum A/S$ means a proportion of effective bonding area on the polymer coating, and satisfies: $4\% \leq n \times \sum A/S \leq 50\%$, wherein
   S represents a surface area of the separator substrate;
   $\sum A$ represents the sum of projected areas of all polymer secondary agglomerates within the spray coating points on the separator substrate; and
   n represents the number of the spray coating points within the area S.

2. The polymer-coated separator with the secondary agglomerates according to claim 1, **characterized in that** $25 \leq A/B \leq 10000$, and $2500 \leq C/A \leq 5 \times 10^5$; and

$$6\% \leq n \times \sum A/S \leq 30\%.$$

3. The polymer-coated separator with the secondary agglomerates according to claim 1, wherein the polymer-coated separator has a bonding strength of 1 N/m or more to a ternary positive electrode, detennined as described in the description, and has a bonding strength of 0.5 N/m or more to a graphite negative electrode, detennined as described in the description; and/or

the polymer-coated separator has an ionic conductivity of 80%-110% of an ionic conductivity of the separator substrate, detennined as described in the description; and/or

the polymer-coated separator has an electrolyte uptake rate of 70% or more, determined as described in the description, and an electrolyte retention rate of 70% or more, detennined as described in the description; and/or

the polymer-coated separator has a powder shedding rate of 5% or less, detennined as described in the description.

4. The polymer-coated separator with the secondary agglomerates according to any one of claims 1-3, wherein the polymer coating comprises:

80-100 parts by mass a polymer with secondary agglomerates;
2-20 parts by mass a binder; and
0.01-3 parts by mass a dispersant.

5. The polymer-coated separator with the secondary agglomerates according to claim 4, wherein the polymer with the secondary agglomerates comprises at least one selected from a polyvinylidene fluoride homopolymer, a polyvinylidene fluoride-trifluoroethylene copolymer, a polyvinylidene fluoride-methyl methacrylate copolymer, a polyvinylidene fluoride-hexafluoropropylene copolymer, a polyvinylidene fluoride-acrylic acid copolymer, polymethyl methacrylate, polyethylene, and an acrylate polymer; and/or

the binder comprises at least one selected from carboxymethylcellulose, hydroxyethylcellulose, polyacrylic acid, polymethacrylic acid, polymethyl methacrylate, and an acrylonitrile multipolymer; and/or
the dispersant comprises at least one selected from an ethylene-acrylic acid copolymer, an ethylene-vinyl acetate copolymer, acrylic acid-polyurethane, and polyethylene glycol.

6. The polymer-coated separator with the secondary agglomerates according to any one of claims 1-3, wherein the separator substrate has a thickness of 3-25 $\mu$m, and a porosity of 20-80%; and/or the polymer coating has a thickness of 0.5-10 $\mu$m.

7. A preparation method for the polymer-coated separator with the secondary agglomerates according to claim 1, comprising:
S01, uniformly mixing a dispersant with water, then adding a polymer in a batches, a mass of the polymer added each time being 1/a of a total amount, each time after adding the polymer, first performing slow stirring, then performing quick stirring and then performing slow stirring, until the polymer is completely added, wherein a≥2; finally adding a binder, and performing uniform mixing and filtering to obtain a polymer slurry:
the step S01 comprises:

S011, uniformly mixing the water with the dispersant to obtain a first mixed solution;
S012, adding the polymer into the first mixed solution in a batches, the amount of the polymer added each time being 1/a of the total amount, after each addition, performing first-stage dispersion: wherein a stirring rotational speed is 100 rpm-600 rpm, and a stirring time is 10 min-50 min, and then performing second-stage dispersion: wherein a stirring rotational speed is 1000 rpm-2000 rpm, and a stirring time is 30 min-180 min, and finally performing third-stage dispersion: wherein a stirring rotational speed is 100 rpm-600 rpm, and a stirring time is 10 min-50 min, until the polymer is completely added to obtain a second mixed solution; and
S013, adding the binder into the second mixed solution, perfonning uniform stirring, and performing filtering through a 40-300-mesh filter to obtain the polymer slurry;
S02, coating a surface of at least one side of a separator substrate with the polymer slurry by means of spin spraying to obtain a polymer coating, wherein spin spraying parameters: a coating speed of 100 m/min-300 m/min, a slurry spraying flow rate being 1500 mL/min-15000 mL/min,
a rotational speed of the spraying being 5000 rpm-15000 rpm, the number of teeth of a rotary disc for the spraying being 200 teeth to 600 teeth, and a distance from the rotary disc to a membrane surface being 20 cm-50 cm; and
S03, drying the separator substrate and the polymer coating to obtain the polymer-coated separator with the secondary agglomerates.

8. The preparation method for the polymer-coated separator with the secondary agglomerates according to claim 7, wherein the polymer slurry has a particle size D10 of 1-4 $\mu$m and a particle size D90 of 6-20 $\mu$m, detennined by using a laser particle size analyzer.

9. The preparation method for the polymer-coated separator with the secondary agglomerates according to claim 7, wherein the polymer coating amount is 0.05-1.5 g/m2.

10. The preparation method for the polymer-coated separator with the secondary agglomerates according to claim 7, wherein in the step S01, after the polymer is completely added, grinding treatment is performed, finally the binder is added, and uniform mixing and filtering are perfonned to obtain the polymer slurry.

11. A battery, comprising the polymer-coated separator with the secondary agglomerates according to any one of claims 1-6.

**Patentansprüche**

1. Polymerbeschichteter Separator mit Sekundäragglomeraten, umfassend:

ein Separatorsubstrat, und
eine Polymerbeschichtung, die auf einer Oberfläche von zumindest einer Seite des Separatorsubstrats aufgebracht ist, wobei
die Polymerbeschichtung eine Vielzahl von willkürlich verteilten Sprühbeschichtungspunkten umfasst, wobei die Sprühbeschichtungspunkte eine Vielzahl von Polymersekundäragglomeraten umfassen, die durch Agglomeration von Polymerprimärpartikeln gebildet ist;
**dadurch gekennzeichnet, dass**
ein beliebiger Sprühbeschichtungspunkt in der Polymerbeschichtung die folgenden Bedingungen erfüllt:

$25{\leq}A/B{\leq}40000$ und $100{\leq}C/A{\leq}10^6$, wobei
A einen projizierten Bereich der Polymersekundäragglomerate innerhalb des Sprühbeschichtungspunktes auf dem Separatorsubstrat darstellt;
B einen projizierten Bereich der Polymerprimärpartikel innerhalb des Sprühbeschichtungspunktes auf dem Separatorsubstrat darstellt; und
C einen projizierten Bereich des Sprühbeschichtungspunktes auf dem Separatorsubstrat darstellt; und
$n{\times}\Sigma A/S$ einen Anteil an effektivem Bindungsbereich auf der Polymerbeschichtung bedeutet und Folgendes erfüllt:

$4\%{\leq}n\Sigma A/S{\leq}50\%$, wobei
S einen Oberflächenbereich des Separatorsubstrats darstellt;
$\Sigma A$ die Summe an projizierten Bereichen von allen Polymersekundäragglomeraten innerhalb der Sprühbeschichtungspunkte auf dem Separatorsubstrat darstellt; und
n die Anzahl der Sprühbeschichtungspunkte innerhalb des Bereichs S darstellt.

2. Polymerbeschichteter Separator mit den Sekundäragglomeraten nach Anspruch 1, **dadurch gekennzeichnet, dass** $25{\leq}A/B{\leq}10000$ und $2500{\leq}C/A{\leq}5x10^5$; und

$$6\%{\leq}nx\sum A/S{\leq}30\%.$$

3. Polymerbeschichteter Separator mit den Sekundäragglomeraten nach Anspruch 1, wobei der polymerbeschichtete Separator eine Haftfestigkeit von 1 N/m oder mehr an einer ternären positiven Elektrode aufweist, bestimmt wie beschrieben in der Beschreibung, und eine Haftfestigkeit von 0,5 N/m oder mehr an einer negativen Graphitelektrode aufweist, bestimmt wie beschrieben in der Beschreibung; und/oder

der polymerbeschichtete Separator eine Ionenleitfähigkeit von 80 %-110 % einer Ionenleitfähigkeit des Separatorsubstrats aufweist, bestimmt wie beschrieben in der Beschreibung; und/oder
der polymerbeschichtete Separator eine Elektrolytaufnahmerate von 70 % oder mehr, bestimmt wie beschrieben in der Beschreibung, und eine Elektrolytrückhalterate von 70 % oder mehr, bestimmt wie beschrieben in der Beschreibung, aufweist; und/oder

der polymerbeschichtete Separator eine Pulverabgaberate von 5 % oder weniger aufweist, bestimmt wie beschrieben in der Beschreibung.

4. Polymerbeschichteter Separator mit den Sekundäragglomeraten nach einem der Ansprüche 1-3, wobei die Polymerbeschichtung Folgendes umfasst:

80-100 Masseteile eines Polymers mit Sekundäragglomeraten;

2-20 Masseteile eines Bindemittels; und

0,01-3 Masseteile eines Dispergiermittels.

5. Polymerbeschichteter Separator mit den Sekundäragglomeraten nach Anspruch 4, wobei das Polymer mit den Sekundäragglomeraten zumindest eines ausgewählt aus einem Polyvinylidenfluorid-Homopolymer, einem Polyvinylidenfluorid-Trifluorethylen-Copolymer, einem Polyvinylidenfluorid-Methylmethacrylat-Copolymer, einem Polyvinylidenfluorid-Hexafluorpropylen-Copolymer, einem Polyvinylidenfluorid-Acrylsäure-Copolymer, Polymethylmethacrylat, Polyethylen und einem Acrylatpolymer umfasst; und/oder

das Bindemittel zumindest eines ausgewählt aus Carboxymethylcellulose, Hydroxyethylcellulose, Polyacrylsäure, Polymethacrylsäure, Polymethylmethacrylat und einem Acrylnitril-Multipolymer umfasst; und/oder

das Dispergiermittel zumindest eines ausgewählt aus einem Ethylen-Acrylsäure-Copolymer, einem Ethylen-Vinylacetat-Copolymer, Acrylsäure-Polyurethan und Polyethylenglykol umfasst.

6. Polymerbeschichteter Separator mit den Sekundäragglomeraten nach einem der Ansprüche 1-3, wobei das Separatorsubstrat eine Dicke von 3-25 $\mu$m und eine Porosität von 20-80 % aufweist; und/oder

die Polymerbeschichtung eine Dicke von 0,5-10 $\mu$m aufweist.

7. Zubereitungsverfahren für den polymerbeschichteten Separator mit den Sekundäragglomeraten nach Anspruch 1, umfassend:

S01, gleichmäßiges Mischen eines Dispergiermittels mit Wasser, dann Hinzufügen eines Polymers in Chargen, wobei eine Masse des jedes Mal hinzugefügten Polymers 1/a einer Gesamtmenge ist, jedes Mal nach dem Hinzufügen des Polymers, zuerst Durchführen von langsamem Rühren, dann Durchführen von schnellem Rühren und dann Durchführen von langsamem Rühren, bis das Polymer vollständig hinzugefügt ist, wobei a$\geq$2; schließlich Hinzufügen eines Bindemittels und Durchführen von gleichmäßigem Mischen und Filtern, um eine Polymerschlacke zu erhalten;

wobei der Schritt S01 Folgendes umfasst:

S011, gleichmäßiges Mischen des Wassers mit dem Dispergiermittel, um eine erste gemischte Lösung zu erhalten;

S012, Hinzufügen des Polymers in die erste gemischte Lösung in einer Charge, wobei die Menge des jedes Mal hinzugefügten Polymers 1/a der Gesamtmenge ist, nach jeder Hinzufügung Durchführen von Dispergierung erster Stufe; wobei eine Rührdrehgeschwindigkeit 100 U/min-600 U/min ist und eine Rührzeit 10 min-50 min ist, und dann Durchführen von Dispergierung zweiter Stufe; wobei eine Rührdrehgeschwindigkeit 1000 U/min-2000 U/min ist und eine Rührzeit 30 min-180 min ist, und schließlich Durchführen von Dispergierung dritter Stufe; wobei eine Rührdrehgeschwindigkeit 100 U/min-600 U/min ist und eine Rührzeit 10 min-50 min ist, bis das Polymer vollständig hinzugefügt ist, um eine zweite gemischte Lösung zu erhalten; und

S013, Hinzufügen des Bindemittels in die zweite gemischte Lösung, Durchführen von gleichmäßigem Rühren und Durchführen von Filtern durch einen Filter mit 40-300 Maschen, um die Polymerschlacke zu erhalten;

S02, Beschichten einer Oberfläche von zumindest einer Seite eines Separatorsubstrats mit der Polymerschlacke mittels Schleudersprühen, um eine Polymerbeschichtung zu erhalten, wobei Schleudersprühparameter: eine Beschichtungsgeschwindigkeit von 100 m/min-300 m/min, eine Schlackensprühflussrate 1500 ml/min-15000 ml/min ist, eine Drehgeschwindigkeit des Sprühens 5000 U/min-15000 U/min ist, die Anzahl an Zähnen einer Drehscheibe für das Sprühen 200 Zähne bis 600 Zähne ist und ein Abstand von der Drehscheibe zu einer Membranoberfläche 20 cm-50 cm ist; und

S03, Trocknen des Separatorsubstrats und der Polymerbeschichtung, um den polymerbeschichteten Separator mit den Sekundäragglomeraten zu erhalten.

8.  Zubereitungsverfahren für den polymerbeschichteten Separator mit den Sekundäragglomeraten nach Anspruch 7, wobei die Polymerschlacke eine Partikelgröße D10 von 1-4 μm und eine Partikelgröße D90 von 6-20 μm aufweist, bestimmt durch Verwenden eines Laserpartikelgrößenanalysators.

9.  Zubereitungsverfahren für den polymerbeschichteten Separator mit den Sekundäragglomeraten nach Anspruch 7, wobei die Polymerbeschichtungsmenge 0,05-1,5 g/m2 ist.

10. Zubereitungsverfahren für den polymerbeschichteten Separator mit den Sekundäragglomeraten nach Anspruch 7, wobei in dem Schritt S01, nachdem das Polymer vollständig hinzugefügt ist, Mahlbehandlung durchgeführt wird, schließlich das Bindemittel hinzugefügt wird und gleichmäßiges Mischen und Filtern durchgeführt wird, um die Polymerschlacke zu erhalten.

11. Batterie, umfassend den polymerbeschichteten Separator mit den Sekundäragglomeraten nach einem der Ansprüche 1-6.

**Revendications**

1.  Séparateur revêtu de polymère avec des agglomérats secondaires, comprenant :

    un substrat séparateur, et
    un revêtement polymère appliqué sur une surface d'au moins un côté du substrat séparateur, dans lequel le revêtement polymère comprend une pluralité de points de revêtement par pulvérisation répartis de manière aléatoire, les points de revêtement par pulvérisation comprenant une pluralité d'agglomérats secondaires de polymère formés par agglomération de particules primaires de polymère ;
    **caractérisé en ce que**
    tout point de revêtement par pulvérisation dans le revêtement polymère satisfait aux conditions suivantes : $25 \leq A/B \leq 40\ 000$, et $100 \leq C/A \leq 10^6$, dans lequel
    A représente une zone projetée des agglomérats secondaires de polymère à l'intérieur du point de revêtement par pulvérisation sur le substrat séparateur ;
    B représente une zone projetée des particules primaires de polymère à l'intérieur du point de revêtement par pulvérisation sur le substrat séparateur ; et
    C représente une zone projetée du point de revêtement par pulvérisation sur le substrat séparateur ; et
    $nx\Sigma A/S$ signifie une proportion de zone de liaison effective sur le revêtement polymère, et satisfait : $4\ \% \leq nx\Sigma A/S \leq 50\ \%$, dans lequel
    S représente une surface du substrat séparateur ;
    $\Sigma A$ représente la somme de zones projetées de tous les agglomérats secondaires de polymère à l'intérieur des points de revêtement par pulvérisation sur le substrat séparateur ; et
    n représente le nombre de points de revêtement par pulvérisation dans la zone S.

2.  Séparateur revêtu de polymère avec les agglomérats secondaires selon la revendication 1, **caractérisé en ce que** $25 \leq A/B \leq 10\ 000$, et $2\ 500 \leq C/A \leq 5 \times 10^5$ ; et

$$6\ \% \leq n \times \sum A/S \leq 30\ \%.$$

3.  Séparateur revêtu de polymère avec les agglomérats secondaires selon la revendication 1, dans lequel le séparateur revêtu de polymère présente une force de liaison de 1 N/m ou plus à une électrode positive ternaire, déterminée comme décrit dans la description, et présente une force de liaison de 0,5 N/m ou plus à une électrode négative en graphite, déterminée comme décrit dans la description ; et/ou

    le séparateur revêtu de polymère présente une conductivité ionique de 80 % à 110 % d'une conductivité ionique du substrat séparateur, déterminée comme décrit dans la description ; et/ou
    le séparateur revêtu de polymère présente un taux d'absorption d'électrolyte de 70 % ou plus, déterminé comme décrit dans la description, et un taux de rétention d'électrolyte de 70 % ou plus, déterminé comme décrit dans la description ; et/ou
    le séparateur revêtu de polymère présente un taux de perte de poudre de 5 % ou moins, déterminé comme décrit dans la description.

4. Séparateur revêtu de polymère avec les agglomérats secondaires selon l'une quelconque des revendications 1 à 3, dans lequel le revêtement polymère comprend :

   80 à 100 parties en masse d'un polymère avec des agglomérats secondaires ;
   2 à 20 parties en masse d'un liant ; et
   0,01 à 3 parties en masse d'un dispersant.

5. Séparateur revêtu de polymère avec les agglomérats secondaires selon la revendication 4, dans lequel le polymère avec les agglomérats secondaires comprend au moins un composé choisi parmi un homopolymère de fluorure de polyvinylidène, un copolymère de fluorure de polyvinylidène-trifluoroéthylène, un copolymère de fluorure de polyvinylidène-méthacrylate de méthyle, un copolymère de fluorure de polyvinylidène-hexafluoropropylène, un copolymère de fluorure de polyvinylidène-acide acrylique, le polyméthacrylate de méthyle, le polyéthylène et un polymère d'acrylate ; et/ou

   le liant comprend au moins un composé choisi parmi la carboxyméthylcellulose, l'hydroxyéthylcellulose, l'acide polyacrylique, l'acide polyméthacrylique, le polyméthacrylate de méthyle et un multipolymère d'acrylonitrile ; et/ou
   le dispersant comprend au moins un composé choisi parmi un copolymère d'éthylène-acide acrylique, un copolymère d'éthylène-acétate de vinyle, l'acide acrylique-polyuréthane et le polyéthylène glycol.

6. Séparateur revêtu de polymère avec les agglomérats secondaires selon l'une quelconque des revendications 1 à 3, dans lequel le substrat séparateur présente une épaisseur de 3 à 25 $\mu$m et une porosité de 20 à 80 % ; et/ou le revêtement polymère présente une épaisseur de 0,5 à 10 $\mu$m.

7. Procédé de préparation du séparateur revêtu de polymère avec les agglomérats secondaires selon la revendication 1, comprenant :

   S01, le mélange uniforme d'un dispersant avec de l'eau, puis l'ajout d'un polymère en lots, une masse du polymère ajouté étant à chaque fois égale à 1/a d'une quantité totale, chaque fois après l'ajout du polymère, la réalisation en premier d'une agitation lente, puis la réalisation d'une agitation rapide, puis la réalisation d'une agitation lente, jusqu'à ce que le polymère soit complètement ajouté, a $\geq$ 2 ; l'ajout finalement d'un liant, et la réalisation d'un mélange et d'une filtration uniformes pour obtenir une suspension polymère ;
   l'étape S01 comprend :

   S011, le mélange uniforme de l'eau avec le dispersant pour obtenir une première solution mélangée ;
   S012, l'ajout du polymère dans la première solution mélangée en lots, la quantité du polymère ajoutée étant à chaque fois égale à 1/a de la quantité totale, après chaque ajout, la réalisation d'une dispersion de première phase : dans laquelle une vitesse de rotation d'agitation est de 100 tr/min à 600 tr/min, et un temps d'agitation est de 10 min à 50 min, puis la réalisation d'une dispersion de deuxième phase : dans laquelle une vitesse de rotation d'agitation est de 1 000 tr/min à 2 000 tr/min, et un temps d'agitation est de 30 min à 180 min, et enfin la réalisation d'une dispersion de troisième phase : dans laquelle une vitesse de rotation d'agitation est de 100 tr/min à 600 tr/min, et un temps d'agitation est de 10 min à 50 min, jusqu'à ce que le polymère soit complètement ajouté pour obtenir une seconde solution mélangée ; et
   S013, l'ajout du liant dans la seconde solution mélangée, la réalisation d'une agitation uniforme et la réalisation d'une filtration à travers un filtre à 40 à 300 mailles pour obtenir la suspension polymère ;
   S02, le revêtement d'une surface d'au moins un côté d'un substrat séparateur avec la suspension polymère au moyen d'une pulvérisation par centrifugation pour obtenir un revêtement polymère, dans lequel les paramètres de pulvérisation par centrifugation : une vitesse de revêtement de 100 m/min à 300 m/min, un débit de pulvérisation de suspension de 1 500 ml/min à 15 000 ml/min, une vitesse de rotation de la pulvérisation de 5 000 tr/min à 15 000 tr/min, un nombre de dents d'un disque rotatif pour la pulvérisation de 200 dents à 600 dents, et une distance du disque rotatif à une surface de membrane de 20 cm à 50 cm ; et
   S03, le séchage du substrat séparateur et du revêtement polymère pour obtenir le séparateur revêtu de polymère avec les agglomérats secondaires.

8. Procédé de préparation du séparateur revêtu de polymère avec les agglomérats secondaires selon la revendication 7, dans lequel la suspension polymère présente une taille de particules D10 de 1 à 4 $\mu$m et une taille de particules D90 de 6 à 20 $\mu$m, déterminées en utilisant un analyseur de taille de particules laser.

9. Procédé de préparation du séparateur revêtu de polymère avec les agglomérats secondaires selon la revendication 7, dans lequel la quantité de revêtement polymère est de 0,05 à 1,5 g/m2.

10. Procédé de préparation du séparateur revêtu de polymère avec les agglomérats secondaires selon la revendication 7, dans lequel à l'étape S01, après que le polymère a été complètement ajouté, un traitement de broyage est réalisé, enfin le liant est ajouté, et un mélange et une filtration uniformes sont réalisés pour obtenir la suspension polymère.

11. Batterie, comprenant le séparateur revêtu de polymère avec les agglomérats secondaires selon l'une quelconque des revendications 1 à 6.

FIG. 1

FIG. 2

FIG. 3

FIG. 4

S011 — Uniformly mixing water with a dispersant to obtain a first mixed solution

S01 {

S012 — Adding a polymer into the first mixed solution in a batches, performing three-stage dispersion after each addition, namely, first performing slow stirring, then performing quick stirring and then performing slow stirring, until the polymer is completely added to obtain a second mixed solution

S013 — Adding a binder into the second mixed solution, performing uniform stirring, and performing filtering through a filter to obtain a polymer slurry

S02 — Coating a surface of at least one side of a separator substrate with the polymer slurry by means of spin spraying to obtain a polymer coating

S03 — Drying the separator substrate and the polymer coating to obtain the polymer-coated separator with the secondary agglomerates

FIG. 5

**EP 4 481 927 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 114094283 A
- CN 116190914 A
- CN 114665218 A
- CN 113363672 A
- CN 110571395 A